# EUROPEAN PATENT SPECIFICATION

(11) **EP 2 362 507 B1**
(45) Date of publication and mention of the grant of the patent: **18.09.2013**
(21) Application number: 09834658.8
(22) Date of filing: 18.11.2009
(51) Int. Cl.: H02G 3/04, B60R 16/02, B60R 25/00

(54) **NET-SHAPED PROTECTIVE MATERIAL FOR WIRE HARNESS AND METHOD OF PRODUCTION OF SAME**
NETZFÖRMIGES SCHUTZMATERIAL FÜR EINEN KABELBAUM UND HERSTELLUNGSVERFAHREN DAFÜR
MATÉRIAU PROTECTEUR EN FORME DE FILET POUR FAISCEAU DE CÂBLES ET SON PROCÉDÉ DE FABRICATION

(30) Priority: 22.12.2008 JP 2008326386
(43) Date of publication of application: 31.08.2011
(73) Proprietor: Sumitomo Wiring Systems, Ltd., Yokkaichi-shi, Mie 510-8503 (JP)
(72) Inventor: USHIKAI Tadao, Yokkaichi-shi Mie 510-8503 (JP); IWASAKI Tetsuya, Yokkaichi-shi Mie 510-8503 (JP)
(74) Representative: Müller-Boré & Partner Patentanwälte
(86) International application number: PCT/JP2009/069552
(87) International publication number: WO 2010/073854

(56) References cited:
- WO-A1-03/083198
- WO-A2-2007/121164
- GB-A- 1 209 523
- JP-A- 7 024 219
- JP-A- 8 033 153
- JP-A- 2000 079 948
- JP-A- 2001 171 443
- JP-A- 2003 157 737
- JP-A- 2006 060 884
- JP-A- 2006 273 947
- JP-U- 05 011 720

## Description

### TECHNICAL FIELD

The present invention relates to a net-shaped protective material for a wire harness to be wired on a vehicle. The net-shaped protective material consists of a sheet or a tube sheathing the peripheral surface of a group of electric wires of the wire harness.

### BACKGROUND ART

To bind and protect a group of a plurality of electric wires of a wire harness to be wired on a vehicle and prevent the wire harness from interfering with external interference materials, an adhesive tape is wound around the group of the electric wires or the group of the electric wires are inserted through a tube such as a corrugate tube, a round tube, and the like.
As a sheathing material consisting of the tape and the tube, a vinyl chloride is generally used for the tape, and polypropylene or the like is used for the corrugate tube. The tape and the tube are made of resin.
A net tube consisting of resin fibers as proposed in Japanese Utility Model Application Laid-Open No. 4-21119 is used.

Because a small amount of resin is used for the net tube, the net tube has advantages that it is possible to make the net tube lightweight, produce the cost low, and make the net tube excellent in its stretchability and flexibility. Therefore it is easy to perform an operation of inserting the net tube through the wire harness and bend the net tube along a wiring path of the wire harness.
As compared with a case in which the wire harness is inserted into a closed space inside the corrugate tube or a cylindrical tube, the net tube has an inferior protection function because the group of the electric wires is exposed to the outside through vacancies of a net. But the net tube can be used in a wiring region in which there is no fear of interference of the net tube with external interference materials.

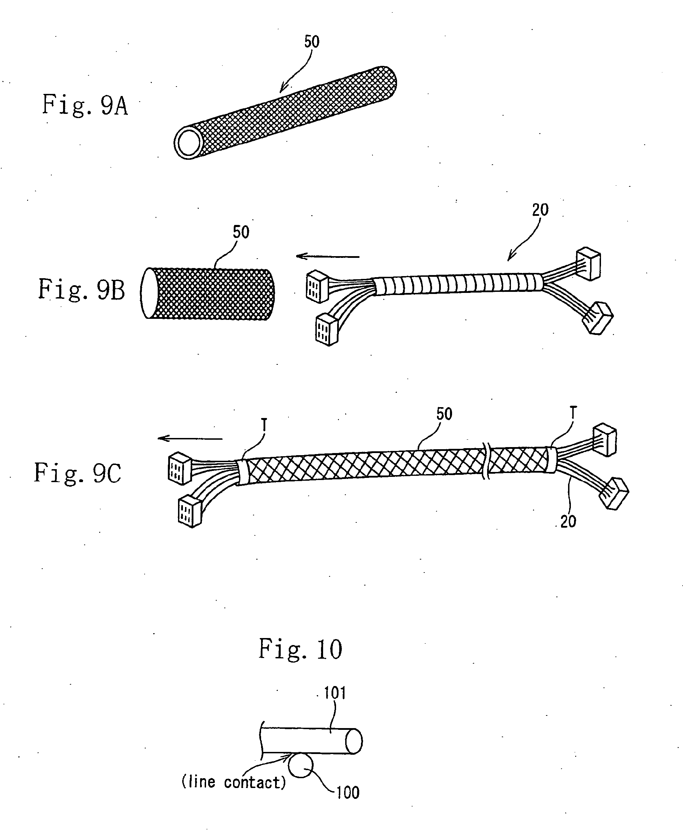

As apparent from the foregoing description, the net tube has advantages. But in the conventional net tube, the net is formed by braiding resin fibers such as polyester, polyethylene or polypropylene. Thus the conventional net tube is not excellent in its flame retardance and thus unsuitable as a sheathing material for the wire harness to be wired inside an engine room.
In addition, in forming the conventional net tube by braiding warps and wefts, the vertical position of the warp and that of the weft at an intersection point of the warp and weft are reversed at an adjacent intersection point thereof. Thus the binding force between the warp and the weft is low at the intersection points. Although the warp and the weft are fused to each other at the intersection point thereof, as shown in Fig. 10, the peripheral surface of a warp 100 and that of a weft 101 are fused to each other in line contact. Thus when a pull strength and a tear strength are applied to the intersection point, the warp 100 and the weft 101 peel from each other at the intersection point thereof, i.e., the shape and size of meshes of the net are prevented from being changed. Thus the conventional net tube has a problem that it has a low shape retention force.

### PRIOR ART DOCUMENT

### PATENT DOCUMENT

Patent document 1: Japanese Utility Model Applications Laid-Open No. 4-21119
GB 1 209 523 A discloses improvements in or relating to nonwoven fabrics in which a non-woven web is reinforced by heating in close contact with an open network thermoplastic sheet material at a temperature sufficiently high to melt at least part of said sheet material.
JP 2006-060884 discloses a protector for overhead wire formed from a cylindrical net body predominantly comprising elastic synthetic resin and/or rubber.
WO-03/083198 discloses a net-shaped material made from strand with an elliptical cross section. The strands are hot-glued to each other.

### SUMMARY OF THE INVENTION

### PROBLEM TO BE SOLVED BY THE INVENTION

The present invention has been made in view of the above-described problem. It is an object of the present invention to provide a net-shaped protective material, consisting of a sheet or a tube for a wire harness to be wired inside an engine room, which can be used as a sheathing material for the wire harness, in which fray is not generated at an intersection point at a cut end, and has a high binding force so that peeling does not peel at the intersection point.

### MEANS FOR SOLVING THE PROBLEM

To solve the above-described problem, the present invention provides a net-shaped protective material for a wire harness in which intersection points of vertical strands and horizontal strands both consisting of identical sectionally elliptic flame-retardant resin fibers are thermally fused to each other under pressure to allow the net-shaped protective material to be net-shaped;
a configuration of each of vacancies surrounded with the vertical strands and horizontal strands is any one of a square, a rectangle, a rhomb, a hexagon or a circular shape consisting of a true circle, an ellipse, and an oblong; and a size of each of the vacancies is adjusted according to a demanded degree of stretchability and strength; and
the vertical strands and the horizontal strands are vertically overlapped each other at the intersection points without braiding the vertical strands and the horizontal strands; one of the vertical strands and the horizontal strands is melted at 40 to 50% of a sectional area thereof and fused to the other of the vertical strands and the horizontal strands with one of the vertical strands and the horizontal strands being embedded in the other of the vertical strands and the horizontal strands or both of the vertical strands and the horizontal strands are melted at 40 to 50% of a sectional area thereof and fused to each other with the vertical strands and the horizontal strands being embedded in each other; and a cut end of the vertical strands and that of the horizontal strands are prevented from being frayed, wherein said flame-retardant resin fibers are composed of not less than one kind of a halogen-free resin component selected from among mixtures each consisting of not less than two kinds of polypropylene, polyester, polyethylene terephthalate, polyamide, polyphenylene ether, polybutylene terephthalate, and polyphenylene sulfide and a flame retardant, added to said halogen-free resin component, which is selected from among a bromine-based flame retardant, phosphates, metal hydroxides, and melamine.

As described above, resin fibers composing the net-shaped protective material of the present invention consisting of a sheet or a tube are sectionally elliptic and flame-retardant. Thus a wire harness to be wired inside an engine room of a vehicle can be sheathed with the net-shaped protective material. Further at the intersection point of the vertical strand and the horizontal strand, the peripheral surfaces thereof are fused to each other not in line contact, but the vertical strand and the horizontal strand are sectionally elliptic and in addition fused to each other with one of the vertical strand and the horizontal strand being embedded in the other of the vertical strand and the horizontal strand or both of the vertical strand and the horizontal strand are fused to each other with the vertical strand and the horizontal strand being embedded in each other. Therefore the vertical strand and the horizontal strand are firmly fixed to each other. Thus even though a pull strength and a tear strength are applied to the net-shaped protective material, disconnection between the vertical strand and the horizontal strand does not occur at the intersection point thereof and the shape and size of meshes of the net are prevented from being changed. Therefore the net-shaped protective material has a high shape retention force and is thus highly reliable.

The flame-retardant resin fibers are composed of not less than one kind of a halogen-free resin component selected from among mixtures each consisting of not less than two kinds of polypropylene, polyester, polyethylene terephthalate, polyamide, polyphenylene ether, polybutylene terephthalate, and polyphenylene sulfide and a flame retardant, added to the halogen-free resin component, which is selected from among a bromine-based flame retardant, phosphates, metal hydroxides, and melamine.
As the resin component, the polypropylene is most favorably used because it can be processed easily and is inexpensive.

In detail, in the net-shaped protective material, 0.5 to 100 parts by mass of the flame retardant is added to 100 parts by mass of the resin component. If necessary, 0 to 50 parts by mass of a filler consisting of magnesium oxide or/and calcium carbonate is added to 100 parts by mass of the resin component.

The vertical strand and the horizontal strand of the present invention are braided such that the vertical position of the vertical strand and that of the horizontal strand at an intersection point of the warp and weft are not reversed at an adjacent intersection point thereof, but are molded into the net-shaped sheet by a sizing machine which is described later. For example, the vertical strand and the horizontal strand are overlapped on each other with the vertical strand disposed at the upper side and the horizontal strand disposed at the lower side and in surface contact at the intersection point thereof. Further the vertical strand and the horizontal strand are fused to each other with both strands being embedded into each other, as described above.
The net-shaped protective material of the present invention consisting of the vertical strands and the horizontal strands is formed as a tube or a sheet.
The sheet is so bent that it has an.undeformable cylindrical configuration to overlap both ends thereof in a width direction thereof on each other.
The tube is formed by thermally fusing both edges of one sheet in the width direction thereof to each other.

Regarding the strength of the net-shaped protective material of the present invention, when the major axis of each of the sectionally elliptic vertical strand and horizontal strand is 0.35mm to 0.5mm and a thickness of a net-shaped sheet is 0.4mm to 0.8mm, a tensile strength of the net-shaped sheet in a vertical direction and a horizontal direction, an elongation thereof, and a tear strength thereof are set to not less than 15.7N, not less than 15.7N, and not less than 150% respectively. The tensile strength of the net-shaped protective material in its vertical and horizontal directions is a value measured by using JIS No. 3 Dumbbell.

The configuration of each of the vacancies surrounded with the vertical strands and the horizontal strands is set to any one of a square, a rectangle, a rhomb, a hexagon or a circular shape consisting of a true circle, an ellipse, and an oblong.
The configuration of the vacancy is adjusted according to a demanded degree of stretchability and strength of the net-shaped protective material.
That is, regarding the size of the vacancies, when a high stretchability is demanded, the size of the mesh of the net is set large to form large vacancies. When a high strength and wear resistance are demanded, the size of the mesh of the net is set small to form small vacancies. Regarding the configuration of the vacancy, to allow the net to be stretchy, the vacancy is set to a rhombic configuration, whereas to allow the net to be unlikely to stretch, the vacancy is set to a square or a rectangle.

As vertical strands and horizontal strands, it is possible to form large-diameter strands and small-diameter strands respectively, arrange the large-diameter strands and the small-diameter strands by sandwiching a plurality of the small-diameter strands between the large-diameter strands, and dispose net-shaped portions formed with the small-diameter strands in vacancies surrounded with the large-diameter strands.
The net-shaped protective material may have a selvage, in which vacancies are not formed, disposed at both ends in the longitudinal direction thereof to allow an adhesive tape to be easily wound around a group of electric wires of a wire harness and around both ends of the net-shaped protective material in its longitudinal direction.

Further, in the net-shaped protective material of the present invention-, the vertical strands and the horizontal strands are molded into a net-shaped sheet by using a sizing machine; the net-shaped sheet is heated and pressurized when the molding is carried out; and intersection points of the vertical strands and the horizontal strands are fused to each other under a pressurized state; and
the net-shaped sheet is cut to a required length; and the cut net-shaped sheet is so bent that the net-shaped sheet has an undeformable cylindrical configuration to overlap both edges of the cut net-shaped sheet in a width direction thereof on each other.

As described above, the sectionally elliptic vertical strands and horizontal strands are molded into the net-shaped sheet by passing them through dies of the sizing machine. Because the vertical strands and the horizontal strands are heated and pressurized in a molding operation, the vertical strands and the horizontal strands make a surface contact at the intersection point thereof and are fused to each other with one of the vertical strand and the horizontal strand being penetrated into the other of the vertical strand and the horizontal strand or both of the vertical strands and the horizontal strands are fused to each other with the vertical strands and the horizontal strands being embedded in each other. Thereby it is possible to enhance a connection force at the intersection point. Thus even though a pull strength and a tear strength are applied to the net-shaped sheet, the vertical strand and the horizontal strand is prevented from peeling from each other at the intersection point.

As described above, the net-shaped sheet so bent that the net-shaped sheet has the undeformable cylindrical configuration can be easily wound around the peripheral surface of a group of electric wires of a wire harness. In a state in which the net-shaped sheet wound around the peripheral surface of the group of the electric wires, the adhesive tape is wound around both ends of the net-shaped sheet in its longitudinal direction to fix the adhesive tape and the group of the electric wires to each other.
In forming the net-shaped tube, both overlapped ends of the net-shaped sheet are thermally fused to each other.

### EFFECT OF THE INVENTION

As described above, in the net-shaped protective material, of the present invention for the wire harness, consisting of the sheet or the tube, the vertical strand and the horizontal strand consisting of the sectionally elliptic and flame-retardant resin fibers are fused to each other at the intersection point thereof. Thus a wire harness to be wired inside an engine room of a vehicle can be sheathed with the net-shaped protective material. Further at the intersection point of the vertical strand and the horizontal strand, the peripheral surfaces thereof are fused to each other not in line contact, but the sectionally elliptic vertical strands and horizontal strands make a surface contact and in addition fused to each other with one of the vertical strand and the horizontal strand being embedded in the other of the vertical strand and the horizontal or both of the vertical strands and the horizontal strands are fused to each other with the vertical strands and the horizontal strands being embedded in each other. Therefore the vertical strand and the horizontal strand are firmly fixed to each other. Thus even though a pull strength and a tear strength are applied to the net-shaped protective material, the vertical strand and the horizontal strand are prevented from peeling from each other at the intersection point, and the shape and size of meshes of the net are prevented from being changed. Therefore the net-shaped protective material has a high shape retention force.
Further because the net-shaped protective material is net-shaped, it is possible to reduce the weight of the net-shaped protective material by not more than half the weight of a conventional round tube made of resin.

### BRIEF DESCRIPTION OF THE DRAWINGS

Fig. 1 shows a net-shaped sheet of the present invention, in which 1(A) is a perspective view, and 1(B) is a partly enlarged view.
Fig. 2(A) is a perspective view showing a flame-retardant resin fiber to be formed as a vertical strand and a horizontal strand, Fig. 2(B) is a perspective view showing a state in which the vertical strands and the horizontal strands are overlapped each other, and 2(C) is an enlarged view of an intersection point of the vertical strand and the horizontal strand.
Figs. 3(A), (B), and (C) show a state in which a wire harness is sheathed with the net-shaped sheet.
Figs. 4(A) and 4(B) show a method for producing the net-shaped sheet.
Figs. 5(A), 5(B) show the process of shaping a net-shaped sheet into a circular-arc sheet.
Fig. 6 is an explanatory view for comparing the size of a vacancy of a net and the function of the vacancy thereof with each other.
Figs. 7(A) through 7(H) show the configurations of meshes of a net tube.
Figs. 8(A) and 8(B) show a test method.
Figs. 9(A), 9(B), and 9(C) show an embodiment of the net-shaped tube.
Fig. 10 shows a problem of a conventional net tube.

### BEST MODE FOR CARRYING OUT THE INVENTION

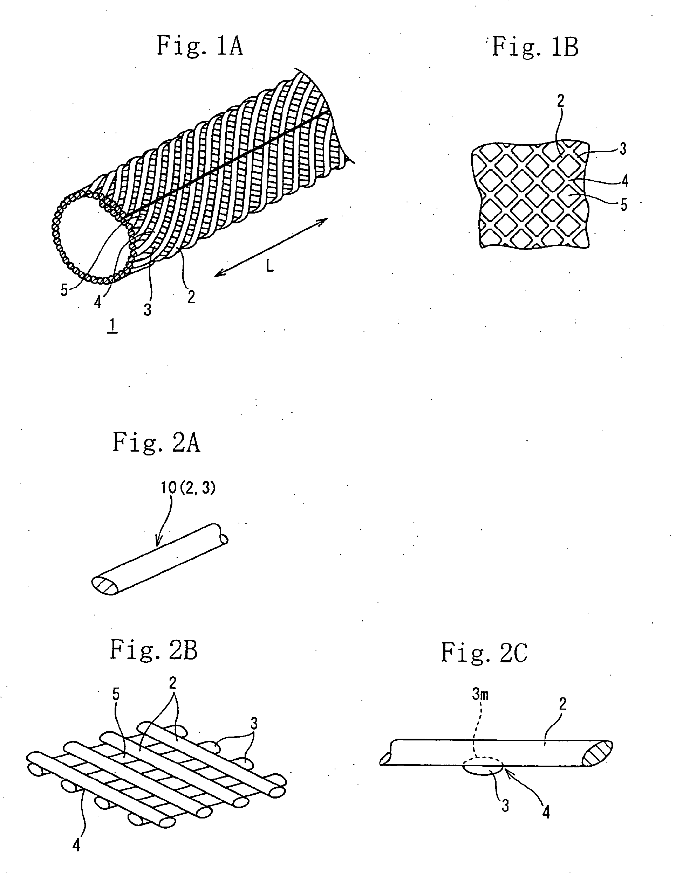

An embodiment of the present invention is described below with reference to drawings.
A net-shaped protective material of the embodiment shown in Fig. 1 is a sheet. The sheet 1 is net-shaped by fusing sectionally elliptic vertical strands 2 and horizontal strands 3 to each other at intersection points 4 thereof to form rhombic vacancies 5 surrounded with the vertical strands 2 and the horizontal strands 3. Because the vacancies 5 are rhombic, the vertical strands 2 are not parallel with a longitudinal direction (axis direction) L of the sheet 1, and the horizontal strands 3 are not orthogonal to the axial direction L, but both the vertical strands 2 and the horizontal strands 3 are in a tilt direction to the axial direction L. Strands are distinguishably named the vertical strand 2 and the horizontal strand 3.

Both the vertical strands 2 and the horizontal strands 3 consist of identical flame-retardant resin fibers 10 and are elliptic in section, as described above.
In detail, the flame-retardant resin fiber 10 is composed of not less than one kind of a halogen-free resin component selected from among mixtures each consisting of not less than two kinds of polypropylene, polyester, polyethylene terephthalate, polyamide, polyphenylene ether, polybutylene terephthalate, and polyphenylene sulfide and a flame retardant, added to the halogen-free resin component, which is selected from among a bromine-based flame retardant, phosphates, metal hydroxides, and melamine.
0.5 to 100 parts by mass of the flame retardant is added to 100 parts by mass of the resin component. If necessary 0 to 50 parts by mass of a filler consisting of magnesium oxide or/and calcium carbonate is added to 100 parts by mass of the resin component.
In this embodiment, the polypropylene (PP) is used as the resin component, and the bromine-based flame retardant consisting of tetrabromobisphenol is used as the flame retardant.

The vertical strands 2 and the horizontal strands 3 are not braided, but fused to each other at intersection points 4 by layering the vertical strands 2 on the horizontal strands 3 with the vertical strands 2 being disposed at an upper side and the horizontal strands 3 being disposed at an upper side.
As shown in Fig. 2(C), the sectionally elliptic vertical strands 2 disposed at the upper side and the sectionally elliptic horizontal strands 3 disposed at the lower side make surface contact at the intersection points 4 and are fused to each other with a portion 3m, of the lower-side horizontal strand 3, which occupies 40 to 50% of the sectional area thereof being penetrated into the upper-side vertical strands 2.

The major axis of each of the vertical strand 2 and the horizontal strand 3 is set to 0.35mm to 0.5mm. The thickness of the net-shaped sheet 1 composed of the vertical strands 2 and the horizontal strands 3 is set to 0.4mm to 0.8mm.
In the net-shaped sheet 1, the length of the vertical strand 2 and that of the horizontal strand 3 surrounding the rhombic vacancy 5 are set to 1.4mm × 1.4mm in this embodiment
The tensile strength, tear strength, and tensile elongation of the sheet 1 in the vertical direction (axial direction) and in the horizontal direction are set to not less than 15.7N, not less than 15.7N, and 180 to 230% respectively.

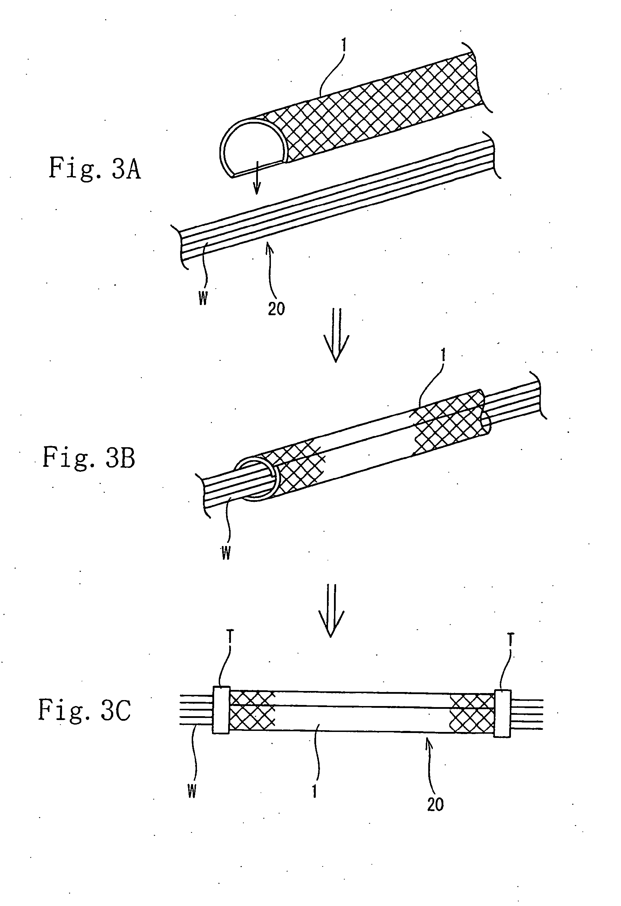

As shown in Fig. 3, by using a method described later, the net-shaped sheet 1 is so bent in advance that the net-shaped sheet 1 has an undeformable cylindrical configuration to overlap both ends thereof in the width direction thereof orthogonal to the longitudinal direction thereof, namely, the axial direction L thereof on each other.
At the process of mounting the sheet 1 on a wire harness 20, the sheet 1 is disposed along the longitudinal direction of a group W of electric wires of the wire harness 20. In this state, the bent sheet 1 having the undeformable cylindrical configuration is wound around the peripheral surface of the group W of the electric wires. In this state, both ends of the net-shaped sheet 1 in the width direction thereof are overlapped each other. Thus the net-shaped sheet 1 is capable of completely covering the entire peripheral surface of the group W of the electric wires. Thereafter an adhesive tape T is wound around both ends of the sheet 1 in its longitudinal direction and the group W of the electric wires drawn out of the sheet 1 to fix the adhesive tape T and the sheet 1 as well as the electric wires to each other.

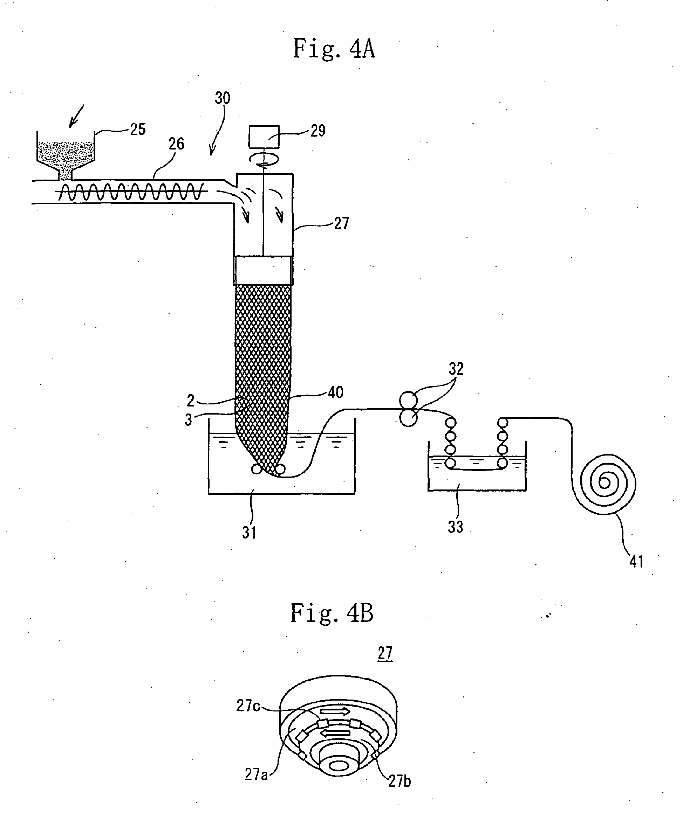

The method for producing the net-shaped sheet 1 is described below.
The sheet 1 is formed by using a sizing machine shown in Figs. 4(A) and 4(B). In detail, after the resin component, the flame retardant, a stabilizer, and the like are supplied to a hopper 25, they are stirred to mix them with one another. A mixture obtained by stirring and mixing the components is transported to a die set 27 with the mixture being kneaded by a screw conveyor 26. The die set 27 molds the kneaded material into the net-shaped sheet consisting of the flame-retardant resin fiber 10.

The die set 27 is constructed of an outer die 27a and an inner die 27b. The outer die 27a and the inner die 27b are rotated in opposite directions by a motor 29. An intersection portion (intersection point) where the vertical strand 2 and the horizontal strand 3 overlap on each other is formed at a portion 27c where a hole of the outer die 27a and a hole of the inner die 27b overlap on each other. When the hole of the outer die 27a and that of the inner die 27b move apart, a grating shape (rhombic shape in this embodiment) is formed.

When the net-shaped sheet is extruded from the die set 27, the vertical strand 2 and the horizontal strand 3 are heated and pressurized to fuse them to each other. Because the vertical strand 2 and the horizontal strand 3 are heated and pressurized, both are thermally fused to each other with the vertical strand 2 and the horizontal strand 3 being penetrated into each other at the intersection point 4 of the vertical strand 2 and the horizontal strand 3, as shown in Fig. 2 (C).
Thereafter a net-shaped sheet 40 is transported to a cooling bath 31 and thermally stretched by a draw roll 32. Thereafter the net-shaped sheet 40 is transported to a stretching bath 33 and wound in a coil 41.

The net-shaped sheet 40 is so bent that the net-shaped sheet 40 has an undeformable cylindrical configuration to overlap both ends thereof in the width direction thereof.

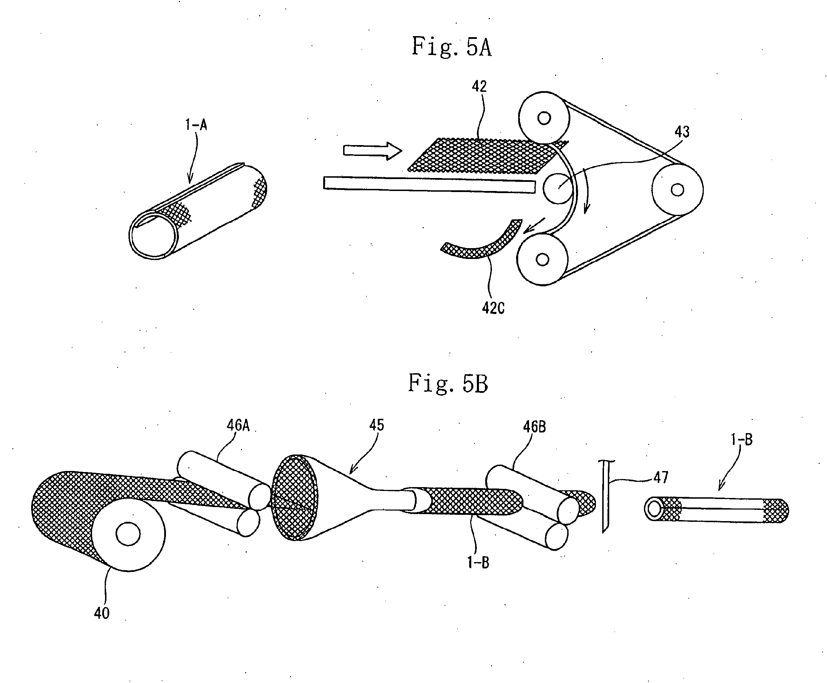

Fig. 5(A) shows a method of producing a sheet 1-A having a predetermined length from the net-shaped sheet 40. Fig. 5(B) shows a method of producing a continuous sheet 1-B from the net-shaped sheet 40.

In the method shown in Fig. 5(A), the uncoiled sheet 40 is cut to a predetermined length by a sheet-cutting machine (not shown) to obtain a cut sheet 42. Thereafter the cut sheet 42 is passed through a heated roll 43 to obtain a cut sheet 42C so bent that an obtained cut sheet 40 has an undeformable circular arc configuration.

In the method shown in Fig. 5(B), a conic cylindrical molding machine 45 is used, and pull rolls 46A and 46B are disposed upstream and downstream from the molding machine 45 respectively. The sheet 40 is passed through the molding machine 45 from the roll 46A to shape the sheet 40 into an undeformable circular arc configuration inside the molding machine 45 so that both ends of sheet 40 in its width direction overlap on each other at a small-diameter portion of the molding machine 45 disposed at the rear portion thereof. The sheet 40 is drawn out by a roll 46B in this state. In this manner, the continuous sheet 1-B is produced. The sheet 1-B is cut to a required length by a cutting machine 47 in dependence on a use condition.

As shown in Fig. 2(C), in the net-shaped sheet 1 having the above-described construction, at the intersection point 4 of the vertical strand 2 and the horizontal strand 3, the vertical strand 2 and the horizontal strand 3 are deformed sectionally elliptically and thermally fused to each other with the vertical strand 2 and the horizontal strand 3 being penetrated into each other. Therefore unlike a case in which the peripheral surface of the vertical strand and that of the horizontal strand are welded to each other, the vertical strand 2 and the horizontal strand 3 are unlikely to peel from each other. Therefore the net-shaped sheet 1 has the above-described degree of tensile strength and tear strength and the shape and size of meshes of the net are prevented from being changed and is thus reliable.
Because the vertical strand 2 and the horizontal strand 3 are formed from the flame-retardant resin fiber 10, the net-shaped sheet 1 has flame retardance and thus can be used as a sheathing material for the wire harness to be wired inside the engine room. Further because the vertical strand 2 and the horizontal strand 3 are firmly fixed to each other, each of the vertical strand 2 and the horizontal strand 3 do not generate fray at a cut end thereof. Furthermore because the sheet 1 is net-shaped, the weight thereof can be reduced to half the weight of a round tube. Particularly by using the sheet 1 as a sheathing material for a large number of wire harnesses to be wired on a car, the sheet 1 is capable of contributing to a decrease of the weight of the car and thus decreasing fuel consumption.

In the net-shaped sheet 1 having the above-described construction, by adjusting the position of the intersection point 4 of the vertical strand 2 and the horizontal strand 3, it is possible to arbitrarily alter the size of the vacancy 5 and the configuration thereof.

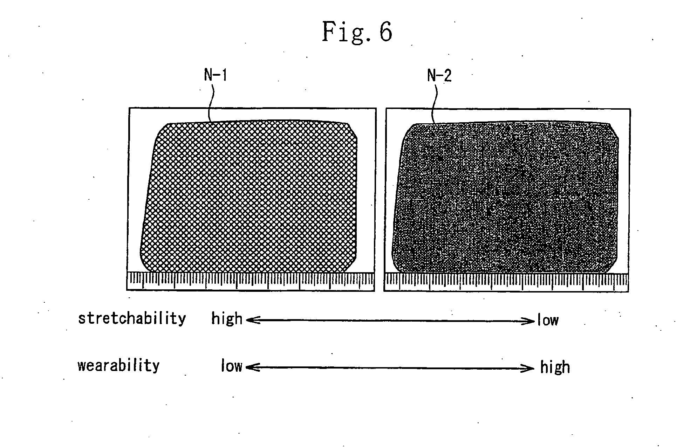

Fig. 6 shows a coarse net N-1 having large vacancies 5 and a fine net N-2 having small vacancies 5. Regarding the relationship between the size of the vacancy 5 and the stretchability, wear resistance, and strength of the net-shaped sheet 1, as shown in Fig. 6, the coarse net N-1 has a high stretchability, but has a low wear resistance and strength. The fine net N-2 has a low stretchability, but has a high wear resistance and strength.
As apparent from the foregoing description, in dependence on a use condition of the wire harness, the net tube 1 is allowed to have a demanded degree of elongation and strength by adjusting the size of the vacancy 5.

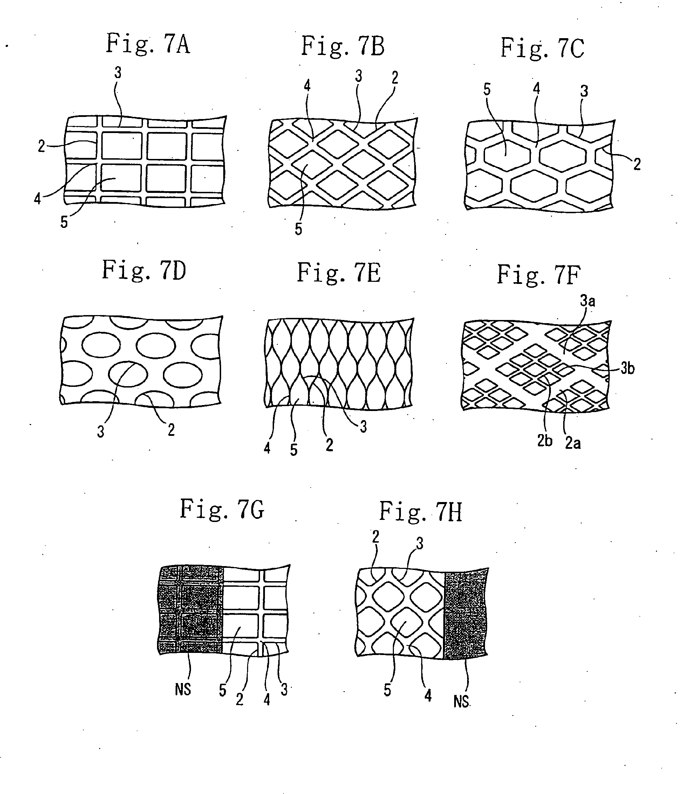

The vacancy 5 can be shaped as shown in Figs. 7(A) through 7(H).
The net tube 1 shown in Fig. 7(A) has rectangular meshes so that the net tube 1 is unlikely to stretch.
The net tube 1 shown in Fig. 7 (B) has rhombic meshes so that the net tube 1 is stretchy.
The net tube 1. shown in Fig. 7 (C) has hexagonal meshes so that the net tube 1 has a strength higher than that of the net tube 1 of (B) and has a stretchability a little lower than that of the net tube 1 of (B).
The net tube 1 shown in Fig. 7 (D) has circular meshes so that the net tube 1 has a strength higher than that of the net tube 1 of (C) and does not have stretchability.
The net tube 1 shown in Fig. 7 (E) has narrow rhombic meshes obtained by stretching the vertical strands 2 and the horizontal strands 3. Although the net tube 1 has a low strength, it has an excellent stretchability.
In the net tube 1 shown in Fig. 7 (F), as the vertical strands and the horizontal strands, large-diameter strands 2a and 3a and small-diameter strands 2b and 3b are formed respectively. The large-diameter strands 2a and 3a and the small-diameter strands 2b and 3b are arranged by sandwiching a plurality of the small-diameter strands 2b and 3b between the large-diameter strands 2a and 3a. Net-shaped portions formed with the small-diameter strands 2b and 3b are disposed in vacancies surrounded with the large-diameter strands 2a and 3a. The net tube 1 has a strength higher than that of the net tube 1 of (D) and stretchability to some extent.
The net tube 1 shown in Fig. 7 (G) has rectangular meshes. The net tube 1 has a selvage, having a solid portion NS, which is formed at both ends of the net tube 1 in its longitudinal direction to allow an adhesive tape to be easily wound around a group of electric wires and the front end of the net tube 1. The solid portion is formed by heating resin fibers to melt them and immersing them in a cooling bath to solidify them.
The net tube 1 shown in Fig. 7 (H) has rhombic meshes, and the net tube 1 has a selvage.
As apparent from the above description, the configuration of the vacancy 5 can be easily adjusted according to a demand for a stretchy net tube or a net tube unlikely to stretch.

Comparison between physical properties of the net-shaped sheets of the examples and those of net-shaped sheets of the comparison examples is described below.

### EXAMPLES

In examples 1, 2, and 3, four parts by mass of a bromine-based flame retardant was added to 100 parts by mass of polypropylene to form vertical strands and horizontal strands. At the intersection point of the vertical strand and the horizontal strand, as described in the embodiment, the vertical strand and the horizontal strand were thermally fused to each other with 40 to 50% of the sectional area of the horizontal strand being penetrated into the vertical strand to obtain a net-shaped sheet having rhombic meshes.
The lengths of sides of vacancies of the examples 1, 2, and 3 were different from each other, as shown in table 1.

### COMPARISON EXAMPLES

In the net tube of the comparison example 1, the sectionally circular vertical strand and horizontal strand were made of the polypropylene, and the surface of the vertical strand and that of the horizontal strand at an intersection point thereof were fused to each other in line contact. The net-shaped sheet had rhombic meshes similarly to the net-shaped sheets of the examples.
In a tube of the comparison example 2, the vertical strand and the horizontal strand were made of polyester and woven densely.
A tape of the comparison example 3 was a vinyl chloride tape generally used to be wound around a wire harness.

**[Table 1]**

| | Target value | Comparison example | Example1 | Example2 | Example3 |
|---|---|---|---|---|---|
| Thickness (mm) | 0.65 | 0.4 | 0.6~0.8 | 0.7~0.8 | 0.8~0.9 |
| Open size of strand (mm) | 1.1×1.1mm | 1.7×1.7 | 1.4×1.4 | 1.2×1.2 | 1.0×0.9 |
| Flame retardance (OI value) | No less than 23.5 | Non-flame-retardant (17) | Flame-retardant (22) | Flame-retardant (24.5) | Flame-retardant (24.5) |
| Material | Flame-retardant PP | PP | Flame-retardant PP | Flame-retardant PP | Flame-retardant PP |
| Tensile strength (N) Horizontal JIS No. 3 Dumbbell measured value | No less than 15.7 | 2.8 | 7.9~10.1 | 12~18 | 21(0.8t) |
| Tensile strength (N) vertical JIS No. 3 Dumbbell measured value | No less than 15.7 | 2.4 | 4~7 | 3~9 | 14 (0.8t) |
| Tensile elongation (%) | No less than 150 | 210 | 180~230 | 140~160 | 150~213 |
| Wear test of tape (mm) | No less than 1000 | 500~1000 | 670~3080 | 2250~4420 | 3200~6100 |

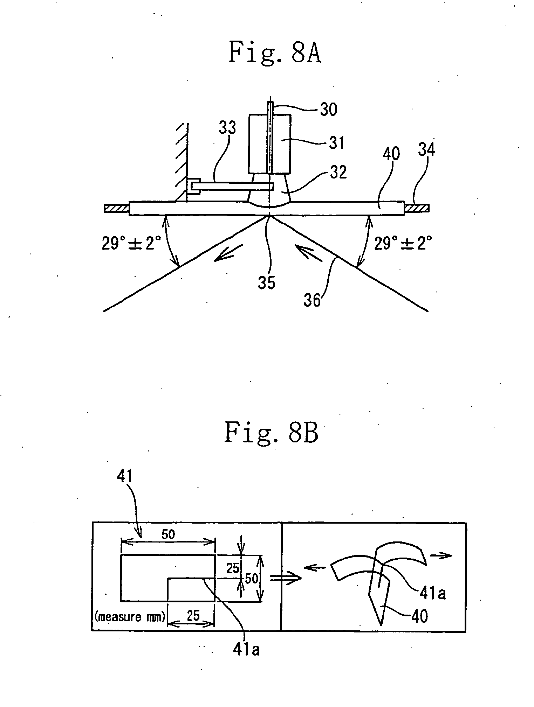

The wear volumes of tapes shown in table 1 were measured by using a test apparatus shown in Fig. 8.
In the test apparatus, an auxiliary weight 31 was mounted on a supporting bar 30, and a bracket 32 is disposed below the auxiliary weight 31. The bracket 32 was coupled to the front end of a cantilevered shaft arm 33. A test tape 40 was fixed to a horizontal supporting bar 34. In this state, a wear tape 36 consisting of 150A sand paper was moved in a direction shown with arrows with the wear tape 36 being held by a supporting pin 35 and sliding the test tape 40. The wear volume of the test tape 40 was measured at a portion thereof where the wear tape 36 slid.

The tear strength shown in table 1 was measured as follows: As shown in Fig. 8(B), a slit 41a having a length of 25mm was formed from the center of one side of a test tape 41 having vertical and horizontal lengths of 50mm. The test tape 41 was pulled in left-ward and right-ward directions by setting the slit 41a as the boundary.

As shown in table 1, the test net-shaped sheets of the examples 1, 2, and 3 were excellent in the flame retardance (OI value) thereof. The OI values of the test net-shaped sheets of the examples 2 and 3 were more than the target value of 23.5.
The test net-shaped sheets of the examples 1, 2, and 3 had a tensile strength 3 to 10 times higher than the test net tube of the comparison example 1 in which intersection points of the vertical strands and the horizontal strands were fused to each other in line contact and tear strengths higher than the test net tube of the comparison example 1. In the wear test, the test.net-shaped sheets of the examples 1, 2, and 3 had wear volumes not less than the target value of 1000, which proved that they were excellent in the wear resistance thereof.

In the above-described embodiment, the net-shaped sheet 1 is shaped into a circular arc configuration such that both ends in its width direction overlap each other. Besides, as shown in Fig. 9(A), overlapped both ends of the net-shaped sheet 1 may be thermally fused to each other to form a tube 50.
As shown in Fig. 9(B), after a wire harness 20 is inserted through the contracted net-shaped tube 50, the net-shaped tube 50 is stretched as shown in Fig.9(C) to fix a group of electric wires to an adhesive tape T.

### EXPLANATION OF REFERENCE SYMBOLS AND NUMERALS

1: net-shaped sheet
2: vertical strand
3: horizontal strand
4: intersection point
5: vacancy
50: net-shaped tube

## Claims

1. A net-shaped protective material for a wire harness in which intersection points of vertical strands and horizontal strands both consisting of identical sectionally elliptic flame-retardant resin fibers are thermally fused to each other under pressure to allow said net-shaped protective material to be net-shaped;
a configuration of each of vacancies surrounded with the vertical strands and horizontal strands is any one of a square, a rectangle, a rhomb, a hexagon or a circular shape consisting of a true circle, an ellipse, and an oblong; and a size of each of the vacancies is adjusted according to a demanded degree of stretchability and strength; and
said vertical strands and said horizontal strands are vertically overlapped each other at said intersection points without braiding said vertical strands and said horizontal strands; one of said vertical strands and said horizontal strands is melted at 40% to 50% of a sectional area thereof and fused to the other of said vertical strands and said horizontal strands with one of said vertical strands and said horizontal strands being embedded in said other of said vertical strands and said horizontal strands or both of said vertical strands and said horizontal strands are melted at 40% to 50% of a sectional area thereof and fused to each other with said vertical strands and said horizontal strands being embedded in each other; and a cut end of said vertical strands and that of said horizontal strands are prevented from being frayed, wherein said flame-retardant resin fibers are composed of not less than one kind of a halogen-free resin component selected from among mixtures each consisting of not less than two kinds of polypropylene, polyester, polyethylene terephthalate, polyamide, polyphenylene ether, polybutylene terephthalate, and polyphenylene sulfide and a flame retardant, added to said halogen-free resin component, which is selected from among a bromine-based flame retardant, phosphates, metal hydroxides, and melamine.

2. A net-shaped protective material for a wire harness according to claim 1, wherein 0.5 to 100 parts by mass of said flame retardant is added to 100 parts by mass of said resin component; and 0 to 50 parts by mass of a filler consisting of magnesium oxide or/and calcium carbonate is added to 100 parts by mass of said resin component.

3. A net-shaped protective material for a wire harness according to any one of claims 1 through 2, wherein when a major axis of each of said sectionally elliptic vertical strands and horizontal strands is 0.35mm to 0.5mm and a thickness of a net- shaped sheet is 0.4mm to 0.8mm, a tensile strength of said net-shaped sheet in a vertical direction and a horizontal direction, a tear strength thereof, and an elongation thereof are set to not less than 15.7N, not less than 15.7N, and not less than 150% respectively.

4. A net-shaped protective material for a wire harness according to any one of claims 1 through 3, wherein said net-shaped protective material consists of a tube or a sheet;
said sheet is so bent that said sheet has an undeformable cylindrical configuration to overlap both ends of said sheet in a width direction thereof on each other; and
said tube is formed by thermally fusing both edges of one sheet in a width direction thereof to each other.

5. A net-shaped protective material for a wire harness according to claims 1, 2, 3 and 4, wherein as said vertical strands and said horizontal strands, large-diameter strands and small-diameter strands are formed respectively;
said large-diameter strands and said small-diameter strands are arranged by sandwiching a plurality of said small-diameter strands between said large-diameter strands; and
net-shaped portions formed with said small-diameter strands are disposed in vacancies surrounded with said large-diameter strands.

6. A net-shaped protective material for a wire harness according to any one of the preceding claims, which has a selvage, in which vacancies are not formed, disposed at both ends in a longitudinal direction thereof.

## Patentansprüche

1. Ein netzförmiges Schutzmaterial für einen Kabelbaum, wobei Schnittpunkte von vertikalen Strängen und horizontalen Strängen, die beide aus identischen flammenhemmenden Harzfasern mit elliptischem Querschnitt bestehen, unter Druck thermisch zusammengefügt bzw. miteinander verschmolzen werden, um dem netzförmigen Schutzmaterial zu ermöglichen, netzförmig zu sein; wobei
eine Konfiguration jeder der von vertikalen Strängen und horizontalen Strängen umgebenen Lücken irgendeine unter den folgenden Formen aufweist: ein Quadrat, ein Rechteck, eine Raute, ein Sechseck oder eine rundumlaufende Form, bestehend aus einem wahren Kreis, einer Ellipse, und einer länglichen Form; und wobei die Größe jeder der Lücken entsprechend einem geforderten Maß an Dehnbarkeit und Widerstandsfähigkeit angepasst wird; und wobei
die genannten vertikalen Stränge und die genannten horizontalen Stränge vertikal miteinander an den genannten Schnittpunkten überlappt werden, ohne die genannten vertikalen Stränge und die genannten horizontalen Stränge zu flechten; wobei einer unter den genannten vertikalen Strängen und den genannten horizontalen Strängen an 40% bis 50% einer Querschnittsfläche davon angeschmolzen wird und mit dem anderen unter den genannten vertikalen Strängen und den genannten horizontalen Strängen verschmolzen wird, wobei einer unter den genannten vertikalen Strängen und den genannten horizontalen Strängen in den genannten anderen unter den genannten vertikalen Strängen und den genannten horizontalen Strängen eingebettet wird, oder wobei beide unter den genannten vertikalen Strängen und den genannten horizontalen Strängen an 40% bis 50% einer Querschnittsfläche davon angeschmolzen werden und miteinander verschmolzen werden, wobei die genannten vertikalen Stränge und die genannten horizontalen Stränge ineinander eingebettet werden, und wobei ein geschnittenes Ende der genannten vertikalen Stränge und dasjenige der genannten horizontalen Stränge davon abgehalten wird, zu zerfransen, wobei die genannten flammenhemmenden Harzfasern aus mindestens einer Art von halogenfreier Harzkomponente bestehen, ausgewählt unter Mischungen, von denen jede aus mindestens zwei Arten von Polypropylen, Polyester, Polyethylenterephthalat, Polyamid, Polyphenylen-Ether, Polybutylenterephthalat und Polyphenylsulfid besteht und einem Flammschutzmittel, das zur halogenfreien Harzkomponente hinzugefügt wird, und das ausgewählt wird unter einem der Folgenden: einem bromhaltigen Flammschutzmittel, Phosphaten, Metallhydroxiden und Melamin.

2. Ein netzförmiges Schutzmaterial für einen Kabelbaum nach Anspruch 1, wobei 0,5 bis 100 Masseanteile des genannten Flammenschutzmittel zu 100 Masseanteilen der genannten Harzkomponente hinzugefügt werden; und wobei 0 bis 50 Masseanteile eines Füllstoffes, der aus Magnesiumoxid und/oder Kalziumkarbonat besteht, zu 100 Masseanteilen der genannten Harzkomponente hinzugefügt werden.

3. Ein netzförmiges Schutzmaterial für einen Kabelbaum nach einem der Ansprüche 1 bis 2, wobei, wenn eine Hauptachse von jedem unter den genannten vertikalen Strängen und den genannten horizontalen Strängen mit elliptischem Querschnitt von 0,35 mm bis 0,5 mm beträgt und eine Dicke eines netzförmigen Blatts von 0,4 mm bis 0, 8 mm beträgt, dann werden eine Zugfestigkeit des genannten netzförmigen Blatts in vertikaler Richtung und in horizontaler Richtung, eine Reißfestigkeit davon und eine Dehnbarkeit davon auf jeweils mindestens 15,7 N, mindestens 15,7 N und mindestens 150% eingestellt.

4. Ein netzförmiges Schutzmaterial für einen Kabelbaum nach einem der Ansprüche 1 bis 3, wobei das genannte netzförmige Schutzmaterial aus einem Rohr oder einem Blatt besteht; wobei
das genannte Blatt so gebogen wird, dass das genannte Blatt eine unverformbare zylindrische Konfiguration aufweist, um beide Enden des genannten Blattes in Richtung der Breite davon aufeinander zu überlappen; und wobei
das genannte Rohr gebildet wird, indem beide Ränder eines Blattes in Richtung der Breite thermisch miteinander verschmolzen werden.

5. Ein netzförmiges Schutzmaterial für einen Kabelbaum nach Anspruch 1, 2, 3 und 4, wobei als genannte vertikale Stränge und genannte horizontale Stränge jeweils Stränge mit großem Durchmesser und Stränge mit kleinem Durchmesser gebildet werden; wobei
die Stränge mit großem Durchmesser und die Stränge mit kleinem Durchmesser angeordnet werden, indem eine Vielzahl der genannten Stränge mit kleinem Durchmesser zwischen den genannten Strängen mit großem Durchmesser eingezwängt werden *(sandwiching)*; und wobei
netzförmige Abschnitte, die mit den genannten Strängen kleinen Durchmessers gebildet werden, in Lücken angeordnet werden, umgeben von den genannten Strängen großen Durchmessers.

6. Ein netzförmiges Schutzmaterial für einen Kabelbaum nach einem der vorhergehenden Ansprüche, das eine Webkante aufweist, in der Lücken nicht gebildet werden, und die an beiden Enden in Längsrichtung davon angeordnet ist.

## Revendications

1. Un matériau de protection en forme de filet pour un faisceau de câbles, dans lequel des points d'intersection de brins verticaux et de brins horizontaux, tous deux consistant de fibres en résine ignifuges présentant une section elliptique identique, sont thermiquement fusionnés l'un avec l'autre sous pression pour permettre au matériau de protection en forme de filet d'être en forme de filet ;
une configuration de chacune parmi les ouvertures *(vacancies)* entourées par les brins verticaux et les brins horizontaux correspond à une parmi les formes suivantes: un carré, un rectangle, une losange, un hexagone ou une forme circulaire consistant en un vrai cercle, une ellipse et un oblong ; et une dimension de chacune parmi les ouvertures est ajustée conformément à un degré exigé d'extensibilité et de robustesse ; et
lesdits brins verticaux et lesdits brins horizontaux sont superposés verticalement aux point d'intersection nommés sans tressage desdits brins verticaux et desdits brins horizontaux ; l'un parmi lesdits brins verticaux et lesdits brins horizontaux est fondu à 40% jusqu'à 50% d'une aire de la section transversale de celui-ci et fusionné avec l'autre parmi lesdits brins verticaux et lesdits brins horizontaux, l'un parmi lesdits brins verticaux et lesdits brins horizontaux étant incorporé dans ledit autre parmi lesdits brins verticaux et lesdits brins horizontaux ou bien les deux parmi lesdits brins verticaux et lesdits brins horizontaux sont fondus à 40% jusqu'à 50% d'une aire de la section transversale de ceux-ci et fusionnés l'un avec l'autre, lesdits brins verticaux et lesdits brins horizontaux étant réciproquement incorporés l'un dans l'autre ; et un bout coupé desdits brins verticaux et un bout coupé desdits brins horizontaux sont empêchés de s'effilocher, sachant que les fibres de résine ignifuges sont composées au moins d'un type de composante de résine exempte d'halogène sélectionné parmi des mélanges, dont chacune est composé d'au moins deux types de polypropylène, polyester, polyéthylène téréphtalate, polyamide, polyphénylène-éther, polybutylène téréphtalate, et sulfure de polyphénylène et un ignifuge, ajouté à la composante de résine exempte d'halogène, qui est sélectionné parmi un ignifuge à base de brome, des phosphates, d'hydroxydes métalliques et mélamine.

2. Un matériau de protection en forme de filet pour un faisceau de câbles d'après la revendication 1, sachant que de 0,5 à 100 parties en masse dudit ignifuge est ajouté à 100 parties en masse de ladite composante de résine : et que de 0 à 50 parties en masse d'une substance de remplissage étant composé d'oxyde de magnésium et/ou de carbonate de calcium sont ajoutées à 100 parties en masse de ladite composante de résine.

3. Un matériau de protection en forme de filet pour un faisceau de câbles d'après la revendication de 1 à 2, sachant que, quand un grand axe de chacun parmi les brins verticaux et les brins horizontaux présentant ladite section elliptique comporte de 0,35 mm à 0,5 mm et qu'une épaisseur d'une feuille en forme de filet comporte de 0,4 mm à 0,8 mm, une résistance à la traction de ladite feuille en forme de filet dans une direction verticale et dans une direction horizontale, une résistance au déchirement de celle-ci, et une élongation de celle-ci sont réglées respectivement à de manière à comporter au moins 15,7 N, au moins 15,7 N, et au moins 150%.

4. Un matériau de protection en forme de filet pour un faisceau de câbles d'après une des revendications de 1 à 3, sachant que ledit matériau de protection en forme de filet est composé d'un tube ou d'une feuille ;
et que ladite feuille est courbée de manière que ladite feuille présente une configuration cylindrique indéformable pour superposer les deux bouts de ladite feuille l'un sur l'autre dans une direction de largeur de celle-ci ; et que
ledit tube est formé par fusion thermique réciproque des deux bords d'une seule feuille dans une direction de largeur de celle-ci.

5. Un matériau de protection en forme de filet pour un faisceau de câbles d'après les revendications 1, 2, 3 et 4, sachant qu'en tant que les brins verticaux et les brins horizontaux on forme respectivement des brins à grand diamètre et des brins à faible diamètre ;
lesdits brins à grand diamètre et lesdits brins à faible diamètre sont disposés en emprisonnant une pluralité desdits brins à faible diamètre entre desdits brins à grand diamètre ; et que
des portions en forme de filet constituées avec desdits brins à faible diamètre sont disposées sous forme d'ouvertures avec lesdits brins à grand diamètre.

6. Un matériau de protection en forme de filet pour un faisceau de câbles d'après une des revendications précédentes, qui présente une lisière, dans laquelle des ouvertures ne sont pas formées, et qui est disposée aux deux extrémités de celui-ci dans une direction longitudinale.
